# EUROPEAN PATENT APPLICATION

(11) **EP 2 990 933 A1**
(43) Date of publication of application: **02.03.2016**
(21) Application number: 15174763.1
(22) Date of filing: 01.07.2015
(51) Int. Cl.: G06F 3/12, H04N 1/00

(54) **METHOD AND SYSTEM FOR CONTROLLING OPERATION OF IMAGE FORMING APPARATUS BY USING WEARABLE DEVICE**

(30) Priority: 01.09.2014 KR 20140115698
(71) Applicant: Samsung Electronics Co., Ltd, Gyeonggi-do 443-742 (KR)
(72) Inventor: KANG, Gyeong-min, Suwon-si (KR); JANG, Wu-seok, Seoul (KR); PARK, Hyun-jung, Seoul (KR); LEE, Hak-ju, Suwon-si (KR)
(74) Representative: Appleyard Lees

(57) **Abstract**

Provided is a method of controlling an operation of an image forming apparatus (120) by using a wearable device (100), the method including operations of converting a task performance request related to a task, which is transmitted from the wearable device, into an execution instruction of a first application that controls the operation of the image forming apparatus; requesting, as the first application is executed based on the execution instruction, the image forming apparatus to perform the task; and receiving, as the task is performed by the image forming apparatus, information indicating a task performance result related to the task from the image forming apparatus.

## Description

### CROSS-REFERENCE TO RELATED APPLICATIONS

This application claims the priority benefit of Korean Patent Application No. 10-2014-0115698, filed on September 1, 2014, in the Korean Intellectual Property Office.

### BACKGROUND

### 1. Field

One or more exemplary embodiments relate to a method and system for controlling an operation of an image forming apparatus by using a wearable device.

### 2. Description of the Related Art

Due to development in technologies of developing portable electronic devices, various wearable devices are being developed and their functions are being improved. Accordingly, there is an increasing demand for a technology for controlling an operation of an apparatus by using a wearable device.

In order to operate an image forming apparatus, a user has to directly input a task instruction by using a button or a touchscreen arranged at the image forming apparatus. Thus, if the user is located in a place distant from the image forming apparatus, the user cannot operate the image forming apparatus. Therefore, there is a demand for developing a technology to solve the aforementioned problems.

### SUMMARY

One or more exemplary embodiments include a method and system for controlling an operation of an image forming apparatus by using a wearable device.

One or more exemplary embodiments include a non-transitory computer-readable recording medium having recorded thereon a program for executing the method, by using a computer.

According to one or more exemplary embodiments, a method of controlling an operation of an image forming apparatus by using a wearable device includes operations of converting a task performance request related to a task, which is transmitted from the wearable device, into an execution instruction of a first application that controls the operation of the image forming apparatus; requesting, as the first application is executed based on the execution instruction, the image forming apparatus to perform the task; and receiving, as the task is performed by the image forming apparatus, information indicating a task performance result related to the task from the image forming apparatus.

According to one or more exemplary embodiments, a system for controlling an operation of an image forming apparatus includes a wearable device in which a second application is installed; and a host device that is connected to the wearable device and the image forming apparatus, and in which a first application and a third application are installed, wherein the third application converts a task performance request related to a task, which is transmitted from the wearable device, into an execution instruction of the first application, and the first application requests the image forming apparatus to perform the task, and receives information indicating a task performance result related to the task from the image forming apparatus.

The task performance request may be generated so as to correspond to a user input received via an execution screen of the second application.

The task performance request may be generated so as to correspond to a user input received via an execution screen of the second application.

According to one or more exemplary embodiments, an image forming apparatus that operates in response to a request from a wearable device, the image forming apparatus includes a first application installed in the image forming apparatus to control an operation of the image forming apparatus; and a third application installed in the image forming apparatus and configured to convert a task performance request, which is transmitted from the wearable device, into an execution instruction of the first application, wherein the third application is configured to receive the task performance request from a second application installed in the wearable device, and wherein the first application controls the operation of the image forming apparatus, in response to the task performance request.

According to one or more exemplary embodiments, a wearable device includes a controller; a wearable device application installed in the controller to generate an execution screen configured to receive a user input for a task and to generate a task performance request based on the user input for the task; and a communication interface configured to transmit the task performance request from the wearable device to a host device, in which a converter application is installed to convert the task performance request into an execution instruction, and in which an image forming controlling application is installed to execute the execution instruction to control an image forming apparatus to perform the task corresponding to the task performance request.

According to one or more exemplary embodiments, a system for controlling an operation of an image forming apparatus, the system including a wearable device in which a second application is installed; and the image forming apparatus that is connected to the wearable device and the image forming apparatus, and in which a first application and a third application are installed, wherein the third application converts a task performance request related to a task, which is transmitted from the wearable device, into an execution instruction of the first application, and wherein the first application requests the image forming apparatus to perform the task, and receives information indicating a task performance result related to the task from the image forming apparatus.

According to one or more exemplary embodiments, at least one non-transitory computer readable medium stores computer readable instructions which when executed implement methods of one or more embodiments.

### BRIEF DESCRIPTION OF THE DRAWINGS

These and/or other aspects will become apparent and more readily appreciated from the following description of exemplary embodiments, taken in conjunction with the accompanying drawings in which:
FIG. 1 is a diagram illustrating a system for controlling an operation of an image forming apparatus, according to an exemplary embodiment;
FIG. 2 is a configuration diagram illustrating a wearable device, a host device, and the image forming apparatus, according to an exemplary embodiment;
FIG. 3 illustrates applications installed in the wearable device and the host device, according to an exemplary embodiment;
FIGS. 4A and 4B illustrate examples of a second application, according to exemplary embodiments;
FIGS. 5A and 5B illustrate examples of a third application, according to exemplary embodiments;
FIG. 6 is a flowchart of an example in which the wearable device, the host device, and the image forming apparatus operate when the host device performs a task of searching for an external device, according to an exemplary embodiment;
FIGS. 7A through 7D illustrate execution screens of the second application that may be output to the wearable device, according to exemplary embodiments
FIG. 8 is a flowchart of an example in which the wearable device, the host device, and the image forming apparatus operate when the image forming apparatus performs a task of printing content, according to an exemplary embodiment;
FIGS. 9A through 9D illustrate execution screens of the second application that may be output to the wearable device, according to exemplary embodiments;
FIG. 10 is a flowchart of an example in which the wearable device, the host device, and the image forming apparatus operate when the image forming apparatus performs a task of scanning content, according to an exemplary embodiment;
FIGS. 11A through 11H illustrate execution screens of the second application that may be output to the wearable device, according to exemplary embodiments;
FIG. 12 is a flowchart of an example in which the wearable device, the host device, and the image forming apparatus operate when the image forming apparatus performs a task of sending a fax, according to an exemplary embodiment;
FIGS. 13A through 13F illustrate execution screens of the second application that may be output to the wearable device, according to exemplary embodiments;
FIG. 14 is a diagram illustrating a system for controlling an operation of the image forming apparatus, according to another exemplary embodiment;
FIG. 15 illustrates applications installed in the wearable device and the host device, according to another exemplary embodiment;
FIG. 16 is a configuration diagram illustrating the wearable device and the image forming apparatus, according to another exemplary embodiment; and
FIG. 17 is a flowchart of a method of controlling an operation of the image forming apparatus by using the wearable device, according to an exemplary embodiment.

### DETAILED DESCRIPTION

Reference will now be made in detail to exemplary embodiments, examples of which are illustrated in the accompanying drawings. In this regard, one or more exemplary embodiments should be considered in a descriptive sense only and not for purposes of limiting the scope of the present disclosure. All differences that can be easily derived, by an expert in the art, from the descriptions and exemplary embodiments will be construed as being included in the scope of the present disclosure.

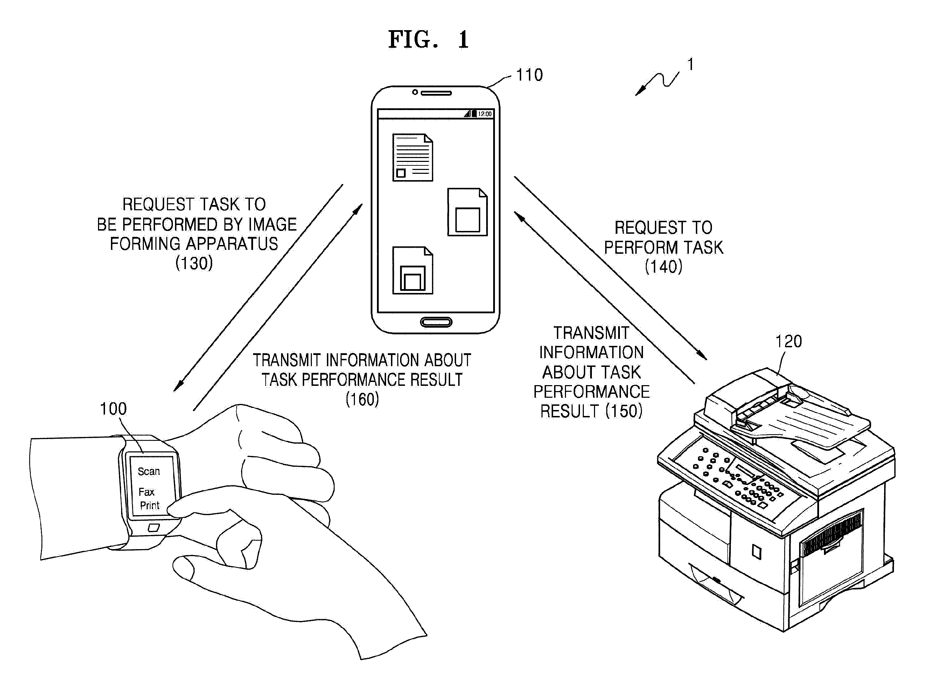

FIG. 1 is a diagram illustrating a system 1 for controlling an operation of an image forming apparatus 120, according to an exemplary embodiment.

Referring to FIG. 1, the system 1 includes a wearable device 100, a host device 110, and the image forming apparatus 120. While FIG. 1 illustrates a watch as an example of the wearable device 100, embodiments are not limited thereto. The wearable device 100 indicates a device that is attached to or is worn on a body of a user and performs a computing operation. Also, the wearable device 100 may exchange data with an external device. The wearable device 100 may be embodied in one of various forms such as a watch, glasses, a bracelet, a ring, a necklace, shoes, a sticker, or the like that may be attached to or may be worn on a body of a user.

Also, while FIG. 1 illustrates a smartphone as an example of the host device 110, embodiments are not limited thereto. A type of the host device 110 is limitless if the host device 110 may be connected to the wearable device 100 and the image forming apparatus 120 via a wired or wireless network and may exchange information with them. The wireless network may include Internet, a local area network (LAN), a wireless local area network (wireless LAN), a wide area network (WAN), a personal area network (PAN), Wi-Fi, Wi-Fi Direct, or Bluetooth, but a type of the wireless network is not limited thereto and thus the wireless network may be any wireless network capable of transmitting and receiving information. The host device 110 may include a smartphone, a tablet personal computer (tablet PC), a notebook PC, a laptop PC, a desktop PC, another wearable device, or a server.

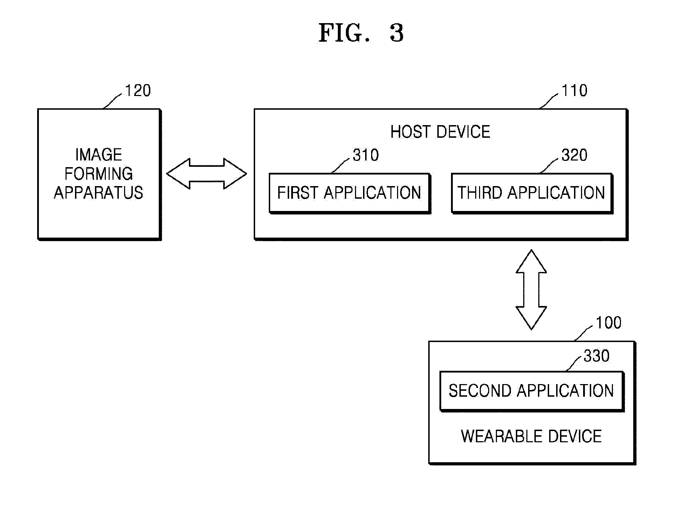

In particular, according to an exemplary embodiment, an application that interoperates with an application installed in the wearable device 100 may be installed in the host device 110. An application refers to computer readable instructions for an application program or a software program that is installed in a device. Also, the fact that applications interoperate with each other indicates that an application is executed based on information that is input to execute another application. For example, if an execution instruction is input to an application installed in the wearable device 100, the application installed in the wearable device 100 may transmit the input execution instruction to an application that is installed in the host device 110. Accordingly, even if a separate execution instruction is not input to the application installed in the host device 110, the application installed in the host device 110 may be executed. An example in which the application installed in the wearable device 100 and the application installed in the host device 110 interoperate with each other will be described with reference to FIGS. 3 through 5.

The image forming apparatus 120 performs a task, based on a task performance request that is transmitted from the wearable device 100 or the host device 110. Also, the image forming apparatus 120 may perform a task, based on a task performance request that is directly input to the image forming apparatus 120. For example, a task performed by the image forming apparatus 120 may include a printing task, a scanning task, a fax sending task, or the like.

An example in which the wearable device 100 controls an operation of the image forming apparatus 120 will be briefly described.

In operation 130, the wearable device 100 transmits a task performance request to the host device 110. A task of the task performance request indicates a task to be performed by the image forming apparatus 120. In other words, in response to the task performance request from the wearable device 100, the host device 110 may request the image forming apparatus 120 to perform the task. The task performance request may be generated so as to correspond to a user input based on an execution screen of an application installed in the wearable device 100. For example, a list of tasks that are performable by the image forming apparatus 120 may be displayed on the execution screen of the application, and a user may select one of the tasks, so that the task performance request with respect to the image forming apparatus 120 may be generated.

In operation 140, the host device 110 requests the image forming apparatus 120 to perform the task, and the image forming apparatus 120 performs the task.

In operations 150 and 160, the image forming apparatus 120 transmits a task performance result related to the task to the host device 110, and the host device 110 transmits the task performance result to the wearable device 100. The task performance result may include information about whether the image forming apparatus 120 has successfully performed the task or has failed to perform the task and may include data (e.g., an image that is generated according to a scanning task) that is generated according to the performance of the task.

As described above, even though the user does not directly input a task performance instruction, the user may control the operation of the image forming apparatus 120 (i.e., task performance).

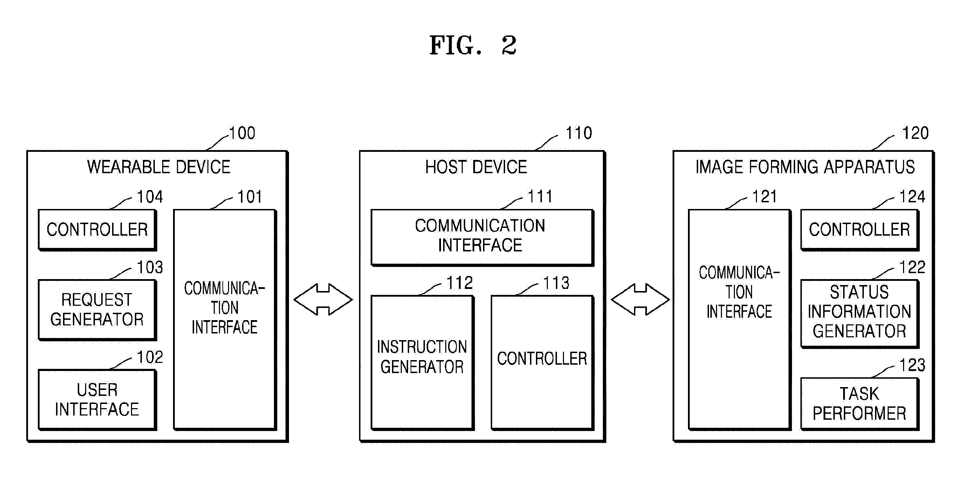

FIG. 2 is a configuration diagram illustrating the wearable device 100, the host device 110, and the image forming apparatus 120, according to an exemplary embodiment.

FIG. 2 illustrates elements of the wearable device 100, the host device 110, and the image forming apparatus 120 that are related to an exemplary embodiment. Thus, one of ordinary skill in the art would understand that the wearable device 100, the host device 110, and the image forming apparatus 120 may further include general-use elements as well as the elements shown in FIG. 2.

Also, each of a controller 104 and request generator 103 of the wearable device 100, an instruction generator 112 and a controller 113 of the host device 110, a controller 124, a status information generator 122, and a task performer 123 of the image forming apparatus 120 may correspond to a processor or a plurality of processors. The processor may be implemented as an array of a plurality of logic gates or may be implemented as a combination of a general-use microprocessor and a memory that stores a program that is executable in the general-use microprocessor. Also, one of ordinary skill in the art would understand that the processor may be embodied using other hardware configurations.

A communication interface 101 exchanges information with the host device 110 or the image forming apparatus 120. The communication interface 101 may include a network module for accessing a wireless network or other devices, a universal serial bus (USB) host module for establishing a data transfer channel with a mobile storage medium, or the like.

A user interface 102 obtains a user input and outputs information. For example, the user interface 102 may output an execution screen of the application installed in the wearable device 100. Also, the user interface 102 may obtain a user input of designating a task to be performed by the image forming apparatus 120 and designating set values requested in performing the task. Also, the user interface 102 may output a task performance result related to the task performed by the image forming apparatus 120. The user interface 102 includes input/output (I/O) devices a display panel, a touchscreen, a speaker, etc., and software modules for driving the I/O devices.

The request generator 103 generates a task performance request, based on information included in the user input. In other words, the request generator 103 generates information about the task to be performed by the image forming apparatus 120, based on the user-designated task and the user-designated set values that are requested in performing the task.

The controller 104 controls the communication interface 101, the request generator 103, and the user interface 102 so as to make the wearable device 100 operate. In particular, the controller 104 may execute the application installed in the wearable device 100, and as the application is executed, the controller 104 may control operations of modules included in the wearable device 100.

The communication interface 111 exchanges information with the wearable device 100 or the image forming apparatus 120. The communication interface 111 may include a network module for accessing a wireless network or other devices, a USB host module for establishing a data transfer channel with a mobile storage medium, or the like.

The instruction generator 112 generates a task performance instruction to be transmitted to the image forming apparatus 120. In more detail, according to the task performance request transmitted from the wearable device 100, the instruction generator 112 generates an instruction that instructs the image forming apparatus 120 to perform the task.

The controller 113 controls the communication interface 111 and the instruction generator 112 so as to make the host device 110 operate. In particular, the controller 113 may execute the application installed in the host device 110, and as the application is executed, the controller 113 may control operations of modules included in the host device 110.

A communication interface 121 of the image forming apparatus 120 exchanges information with the wearable device 100 or the host device 110. The communication interface 121 may include a network module for accessing a wireless network or other devices, a USB host module for establishing a data transfer channel with a mobile storage medium, or the like. Also, according to a function of the image forming apparatus 120, the communication interface 121 may include a modem that is used in transmitting or receiving a fax.

The status information generator 122 generates information indicating a status of the image forming apparatus 120. For example, the status information generator 122 may generate status information indicating the status of the image forming apparatus 120 (e.g., whether the image forming apparatus 120 is ready to perform a task, whether a power of the image forming apparatus 120 is off, or whether the image forming apparatus 120 is connected to another device), a status of consumables included in the image forming apparatus 120 (e.g., a level of a toner, a size and quantity of papers, etc.), a current status of hardware configuration included in the image forming apparatus 120 (e.g., opening/closing of a paper tray, opening/closing of a cover, opening/closing of a flatbed, existence/non-existence of a document on an automatic document feeder (ADF), etc.), or a status of the task performance (e.g., a task failure, task completion, etc.).

The status information that was generated by the status information generator 122 may be transmitted to the host device 110 or the wearable device 100 via the communication interface 121. The status information may be transmitted when the host device 110 or the wearable device 100 requests it, but if a predetermined condition is satisfied, the status information may be transmitted (i.e., in a push manner) without a request from the host device 110 or the wearable device 100. For example, the status information may be transmitted at regular temporal intervals or may be transmitted whenever the status information is changed. If the status information is changed to the host device 110, the host device 110 may transmit the status information to the wearable device 100 via the communication interface 111.

The task performer 123 performs the task, according to the instruction transmitted from the host device 110. The task includes a task of printing content, a task of scanning content, or a fax sending task, and the content includes a document or an image. For example, the task performer 123 may operate hardware configuration required to perform the task or may execute software required to perform the task.

The task performer 123 generates information indicating a task performance result related to the task. The information that indicates the task performance result may include information about whether the image forming apparatus 120 successfully performed the task or failed to perform the task and may include data (e.g., an image that is generated according to a scanning task) that is generated as the task has been performed. The information generated by the task performer 123 may be transmitted to the host device 110 or the wearable device 100 via the communication interface 121. If the information generated by the task performer 123 is transmitted to the host device 110, the host device 110 may transmit the information to the wearable device 100 via the communication interface 111.

The controller 124 controls the communication interface 121, the status information generator 122, and the task performer 123 so as to make the image forming apparatus 120 operate.

FIG. 3 illustrates applications installed in the wearable device 100 and the host device 110, according to an exemplary embodiment.

Referring to FIG. 3, a first application 310 and a third application 320 are installed in the host device 110, and a second application 330 is installed in the wearable device 100. In an exemplary embodiment, the second application 330 and the third application 320 may interoperate with each other, and the first application 310 may instruct the image forming apparatus 120 to perform a task.

The fact that one application exchanges information with another application may indicate that the application exchanges the information with the other application by using a communication interface of a device in which the application is installed. For example, the fact that the second application 330 exchanges information with the third application 320 indicates that the information is exchanged via the communication interface 101 of the wearable device 100 and the communication interface 111 of the host device 110.

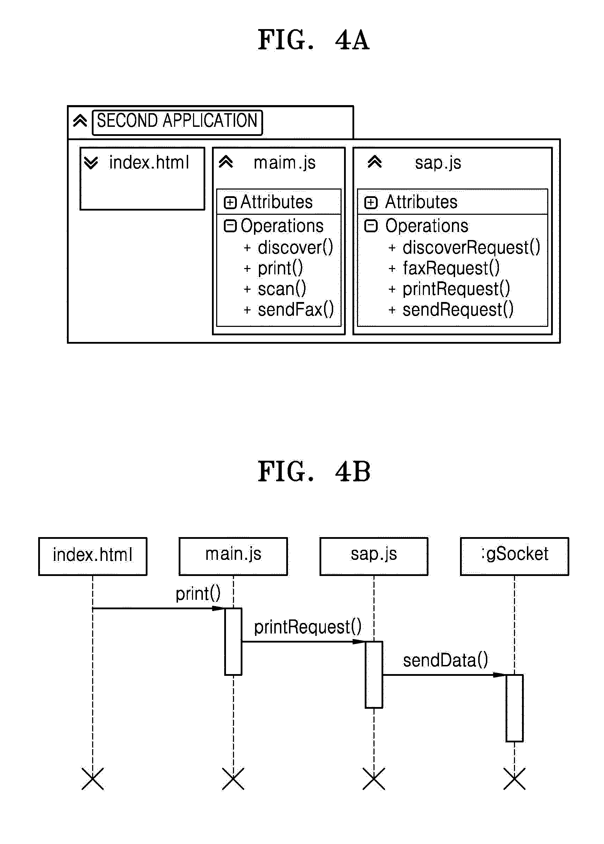

The second application 330 obtains a user input of operating the image forming apparatus 120. Then, based on information included in the user input, the second application 330 generates a task performance request to be transmitted to the third application 320. The user input may include a type of the task to be performed by the image forming apparatus 120, and set values that are requested in performing the task. For example, an execution screen of the second application 330 may be output to the wearable device 100, and according to a guide of the execution screen, a user may input the type of the task and the set values that are requested in performing the task. With reference to FIGS. 4A and 4B, the second application 330 is described in detail.

FIGS. 4A and 4B illustrate examples of the second application 330, according to exemplary embodiments.

FIG. 4A illustrates a class diagram indicating a consumer module included in the second application 330, and FIG. 4B illustrates a sequence diagram of the consumer module included in the second application 330. FIGS. 4A and 4B illustrate only elements for controlling an operation of the image forming apparatus 120 according to an exemplary embodiment. Thus, one of ordinary skill in the art would understand that the class diagram and the sequence diagram of the consumer module may further include other elements as well as the elements shown in FIGS. 4A and 4B.

Also, names of terms shown in FIGS. 4A and 4B are exemplary and are not limited thereto. In other words, any instruction capable of realizing an operation of the second application 330 to be described below may be limitlessly used.

The second application 330 obtains, from a user, a user input of designating a task to be performed by the image forming apparatus 120 and designating set values that are requested for the task. The second application 330 may visually generate a user interface and may output the user interface to a screen of the wearable device 100. The execution screen of the second application 330 that are described above with reference to FIGS. 1 through 3 may be the visually-generated user interface.

The second application 330 interoperates with the third application 320 installed in the host device 110. Thus, the second application 330 may transmit, to the third application 320, information that is generated based on the user input. For example, the second application 330 may be a widget that is installed in the wearable device 100, and the widget may correspond to the third application 320. Also, the second application 330 may include the consumer module. The consumer module may transmit the information generated by the wearable device 100, to a provider module that is installed in the third application 320.

Thus, the class diagram indicating the consumer module may generate the visually-generated user interface to be output to the screen of the wearable device 100, and may include instructions for generating a task performance request based on the user input. Also, the sequence diagram of the consumer module may indicate a relation between the instructions.

"index.html" included in 4A indicates an instruction that visually generates the user interface. Also, "main.js" indicates an instruction that declares a function and a variable that are used in the second application 330 (e.g., the widget). Thus, "main.js" may include particular instructions that correspond to tasks to be performed by the image forming apparatus 120. For example, "main.js" may include particular instructions such as "discover()" that corresponds to a task of searching surrounding external devices, "print()" that corresponds to a task of printing content, "scan()" that corresponds to a task of scanning content, "sendFax()" that corresponds to a task of sending a fax, or the like.

Also, "sap.js" indicates an instruction that realizes a protocol for allowing communication connection between the wearable device 100 and the host device 110, and generates information to be transmitted to the third application 320. Thus, "sap.js" may include driving functions that respectively correspond to the tasks to be performed by the image forming apparatus 120. The driving function may be transmitted to the third application 320, and a function of the third application 320 may be called.

FIG. 4B illustrates an example of the sequence diagram when a task of printing content is designated as a task to be performed by the image forming apparatus 120. If it is assumed that the task to be performed by the image forming apparatus 120 is to scan content, "scan()" function and "scanRequest()" function shown in FIG. 4A may be used, instead of "print()" function and "printRequest()" function shown in FIG. 4B.

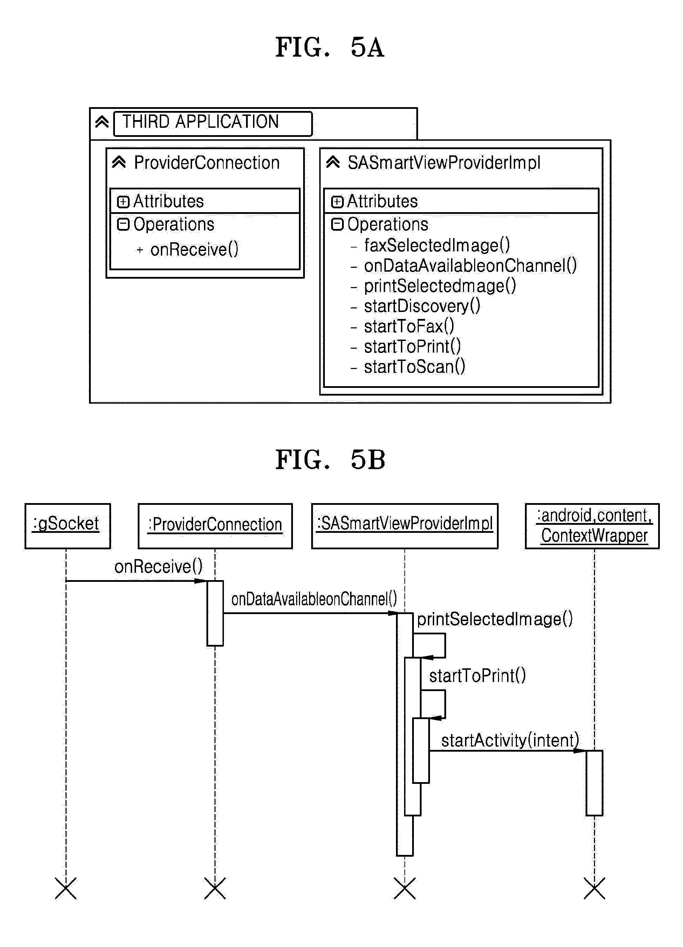

Referring back to FIG. 3, the third application 320 converts the task performance request, which is transmitted from the second application 330, into an execution instruction of the first application 310. The execution instruction is the task performance request that is converted into an intent that corresponds to an operating system of the host device 110. For example, if it is assumed that the operating system of the host device 110 is an Android operating system, the third application 320 may convert the task performance request into an Android intent. Then, the intent executes the first application 310. With reference to FIGS. 5A and 5B, the third application 320 is described in detail.

FIGS. 5A and 5B illustrate examples of the third application 320, according to exemplary embodiments.

FIG. 5A illustrates a class diagram indicating a provider module, and FIG. 5B illustrates a sequence diagram of the provider module. FIGS. 5A and 5B illustrate only elements for controlling an operation of the image forming apparatus 120 according to the an exemplary embodiment. Thus, one of ordinary skill in the art would understand that the class diagram and the sequence diagram of the provider module may further include other elements as well as the elements shown in FIGS. 5A and 5B.

Also, names of terms shown in FIGS. 5A and 5B are exemplary and are not limited thereto. In other words, any instruction capable of realizing an operation of the third application 320 to be described below may be limitlessly used.

The third application 320 receives information from the second application 330, and executes the first application 310 by using the information. For example, if the second application 330 is a widget, the third application 320 may be a program that corresponds to the widget. Also, the third application 320 may include the provider module that corresponds to the consumer module included in the second application 330. As described above with reference to FIG. 4B, as an instruction is transmitted from the consumer module of the second application 330 to "gSocket", a function of the provider module of the third application 320 may be called in response to the instruction that is transmitted from the "gSocket", and may execute the first application 310 by using an intent

FIG. 5B illustrates an example of the sequence diagram when a task of printing content is designated as a task to be performed by the image forming apparatus 120. If it is assumed that the task to be performed by the image forming apparatus 120 is to send a fax, "faxSelectedlmage()" function and "startToFax()" function shown in FIG. 5A may be used, instead of "printSelectedlmage()" function and "startToPrint()" function shown in FIG. 5B.

Referring back to FIG. 3, the first application 310 requests the image forming apparatus 120 to perform the task. In other words, the first application 310 is executed by the third application 320, and instructs the image forming apparatus 120 to perform the task. Here, as the third application 320 executes the first application 310 when the third application 320 receives the task performance request from the second application 330, the image forming apparatus 120 may perform the task in response to the task performance request of the second application 330.

Then, the first application 310 receives information indicating a task performance result related to the task from the image forming apparatus 120. Afterward, the third application 320 transmits the information, which is transmitted from the image forming apparatus 120, to the second application 330.

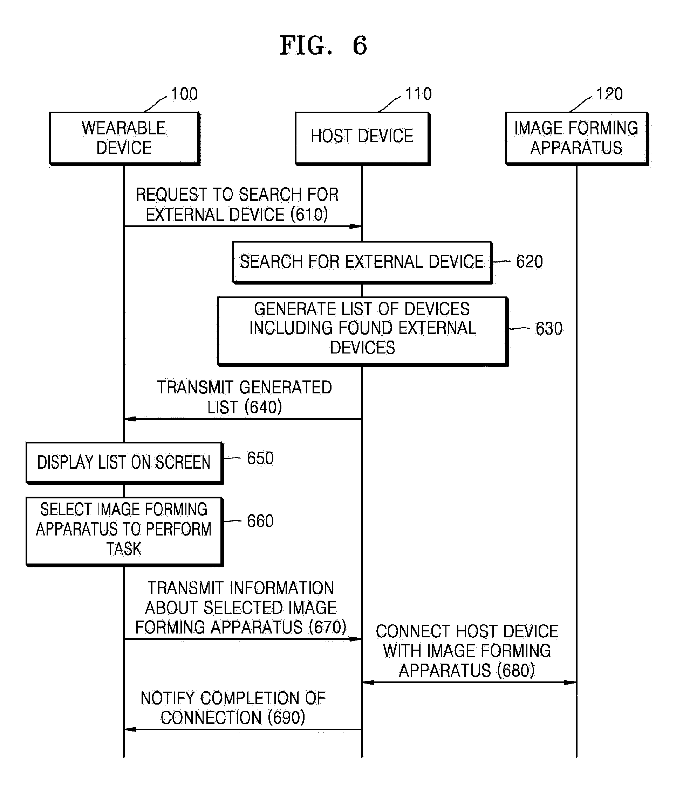

With reference to FIGS. 6 through 13, examples in which the image forming apparatus 120 performs a task in response to a task performance request from the wearable device 100, and transmits a task performance result related to the task will be described. In the examples of FIGS. 6 through 13, the task performed by the image forming apparatus 120 includes a task of searching for an external device, a task of printing content, a task of scanning content, and a task of sending a fax, but is not limited thereto.

FIG. 6 is a flowchart of an example in which the wearable device 100, the host device 110, and the image forming apparatus 120 operate when the host device 110 performs a task of searching for an external device, according to an exemplary embodiment.

The flowchart of FIG. 6 is performed by operations that are processed in chronological order in the wearable device 100, the host device 110, and the image forming apparatus 120 shown in FIGS. 1 through 3. Thus, although descriptions are omitted, if the descriptions are described above with reference to the wearable device 100, the host device 110, and the image forming apparatus 120 shown in FIGS. 1 through 5, the descriptions may also be applied to the flowchart of FIG. 6.

Although not illustrated in FIG. 6, an exchange of information between the wearable device 100 and the host device 110 passes through the third application 320 installed in the host device 110. In other words, the consumer module included in the second application 330 transmits information to the provider module of the third application 320, and the third application 320 converts the information from the second application 330 into an intent and thus executes the first application 310 by using the intent. Also, the information that was transmitted to the third application 320 is transmitted to the consumer module via the provider module, so that the information is transmitted to the second application 330.

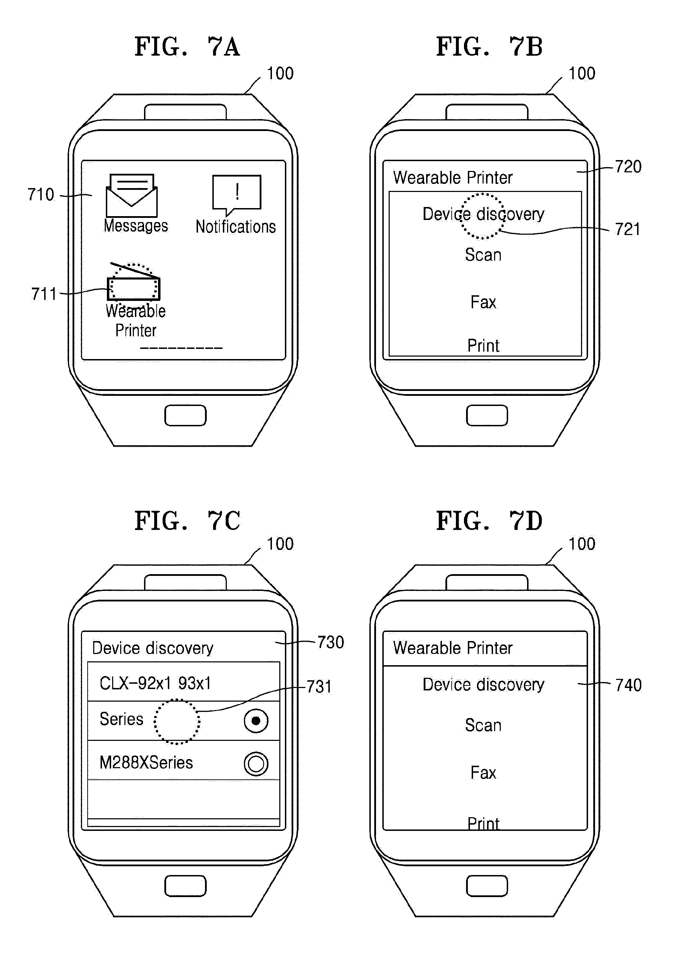

In operation 610, the wearable device 100 requests the host device 110 to search for an external device. For example, the second application 330 may generate, based on a user input, a transmission request about a list of external devices, and the consumer module included in the second application 330 may transmit the generated transmission request to the provider module of the third application 320. The external device indicates at least one device (excluding the wearable device 100) that is located adjacent to the host device 110. The user input that is input to the wearable device 100 may be achieved based on an execution screen of the second application 330. An example in which the user input is achieved based on the execution screen of the second application 330 will be described below with reference to FIG. 7.

In operation 620, the host device 110 searches for the external device. For example, the first application 310 may operate a Wi-Fi module or a Wi-Fi Direct (WFD) module included in the host device 110, so that the host device 110 may search for the external device.

In operations 630 and 640, the host device 110 may generate a list of found external devices and may transmit the list to the wearable device 100. The list may include model names, and internet protocol (IP) addresses or media access control address (MAC) addresses of the found external devices. For example, the first application 310 may generate the list of the found external devices, and the provider module of the third application 320 may transmit the list to the consumer module of the second application 330.

In operations 650 and 660, the wearable device 100 displays the list on a screen of the wearable device 100 and receives an input of selecting the image forming apparatus 120 to perform the task from among the displayed external devices. For example, the second application 330 may visualize the list and may output the list on the screen of the wearable device 100, and then a user may select a particular external device from the list on the screen, so that the image forming apparatus 120 may be selected.

In operation 670, the wearable device 100 transmits information about the selected image forming apparatus 120. For example, a consumer module of the second application 330 may transmit identification (ID) information (e.g., a model name, and an IP address or an MAC address) indicating the image forming apparatus 120 to a provider module of the third application 320.

In operation 680, the host device 110 connects the host device 110 to the image forming apparatus 120. For example, the first application 310 may operate a Wi-Fi module or a WFD module included in the host device 110, so that the host device 110 and the image forming apparatus 120 may be connected to each other.

In operation 690, the host device 110 notifies the wearable device 100 of completion of the connection. For example, the first application 310 may generate information indicating that the connection is complete, and the provider module of the third application 320 may transmit the generated information to the consumer module of the second application 330.

FIGS. 7A through 7D illustrate execution screens of the second application that may be output to the wearable device, according to exemplary embodiments.

The execution screens 710, 720, 730, and 740 of the second application 330 that are shown in FIGS. 7A through 7D may be output to the wearable device 100 while the operations of FIG. 6 are performed.

Referring to FIG. 7A, the execution screen 710 (also referred to as "main execution screen 710") of the second application 330 is output to the wearable device 100. When a user selects an icon 711 displayed on the main execution screen 710, the second application 330 may transmit notification of execution of the first application 310 to the third application 320.

Referring to FIG. 7B, a list 720 including tasks to be requested to the first application 310 is displayed on the wearable device 100. When the user selects an external device search task 721 from the list 720, the second application 330 may transmit a request for an external device search task to the third application 320. Then, the first application 310 may operate a Wi-Fi module or a WFD module included in the host device 110, so that the host device 110 may search for an external device.

Referring to FIG. 7C, a list 730 including found external devices is displayed on the wearable device 100. When the user selects a predetermined device (refer to reference numeral 731) from the list 730, the second application 330 may transmit, to the third application 320, a request of connecting the selected device with the image forming apparatus 120.

Referring to FIG. 7D, the wearable device 100 displays a list 740 including tasks that may be performed by the image forming apparatus 120 connected with the host device 110. If the connection between the host device 110 and the image forming apparatus 120 is successfully performed, the list 740 of FIG. 7D may be displayed on the wearable device 100, and if the connection between the host device 110 and the image forming apparatus 120 is not performed, a screen indicating a failure of the connection may be output to the wearable device 100.

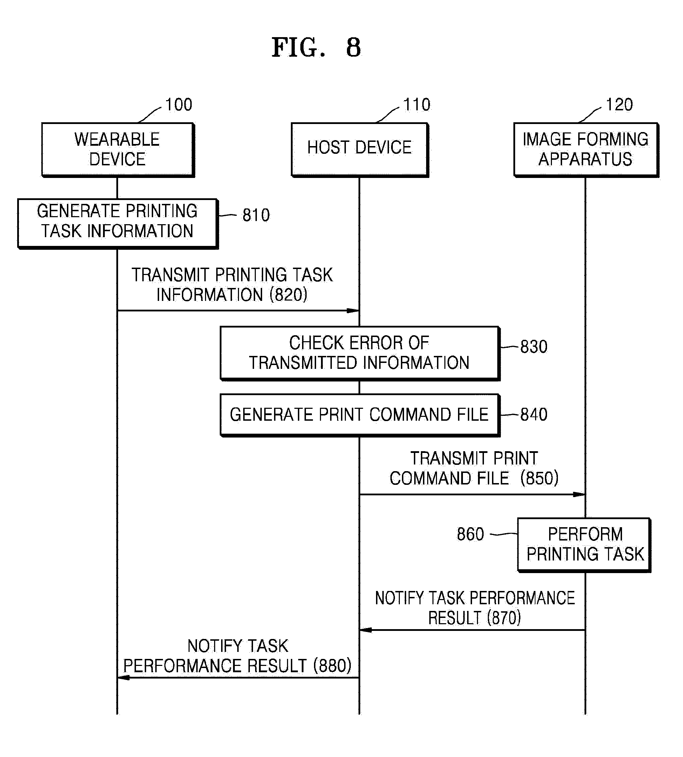

FIG. 8 is a flowchart of an example in which the wearable device 100, the host device 110, and the image forming apparatus 120 operate when the image forming apparatus 120 performs a task of printing content, according to an exemplary embodiment.

The flowchart of FIG. 8 is performed by operations that are processed in chronological order in the wearable device 100, the host device 110, and the image forming apparatus 120 shown in FIGS. 1 through 3. Thus, although descriptions are omitted, if the descriptions are described above with reference to the wearable device 100, the host device 110, and the image forming apparatus 120 shown in FIGS. 1 through 5, the descriptions may also be applied to the flowchart of FIG. 8.

Also, although not illustrated in FIG. 8, as described above with reference to FIG. 6, an exchange of information between the wearable device 100 and the host device 110 is performed via the third application 320 installed in the host device 110.

In operation 810, the wearable device 100 generates printing task information. For example, the second application 330 may generate the printing task information, based on a user input. The printing task information includes information about content that is a print target, and information about set values that are requested for a printing task. If the content is stored in the host device 110, the printing task information may include information about a stored position of the content.

For example, the requested set values for the printing task may include a size of the content, a size of a printing paper, a number of printed copies, if the content is formed of a plurality of pages, a printing order of the pages, a color, etc. However, the set values are not limited to the aforementioned examples, and any option that may be requested for a general printing task may be limitlessly used.

In operation 820, the wearable device 100 transmits the printing task information to the host device 110. For example, a consumer module included in the second application 330 may transmit the printing task information to a provider module of the third application 320.

In operation 830, the host device 110 checks whether the information transmitted from the wearable device 100 has an error. For example, the first application 310 may check whether a storage path of the content or the set values included in the printing task information have an error. Also, the first application 310 may check whether the image forming apparatus 120 is capable of performing the printing task. Although not illustrated in FIG. 8, if the printing task information has an error or the image forming apparatus 120 is not capable of performing the printing task, the first application 310 may generate an error message, and the provider module of the third application 320 may transmit the error message to the consumer module of the second application 330.

In operation 840, the host device 110 generates a print command file. For example, the first application 310 may generate a PRN file for instructing the image forming apparatus 120 to perform the printing task.

In operations 850 and 860, the host device 110 transmits the print command file to the image forming apparatus 120, and the image forming apparatus 120 performs the printing task.

In operation 870, the image forming apparatus 120 notifies the host device 110 of a task performance result related to the printing task. The task performance result may include information indicating whether the printing task has been successfully performed or has failed.

In operation 880, the host device 110 notifies the wearable device 100 of the task performance result related to the printing task. For example, the provider module of the third application 320 may transmit information about the task performance result to the consumer module of the second application 330.

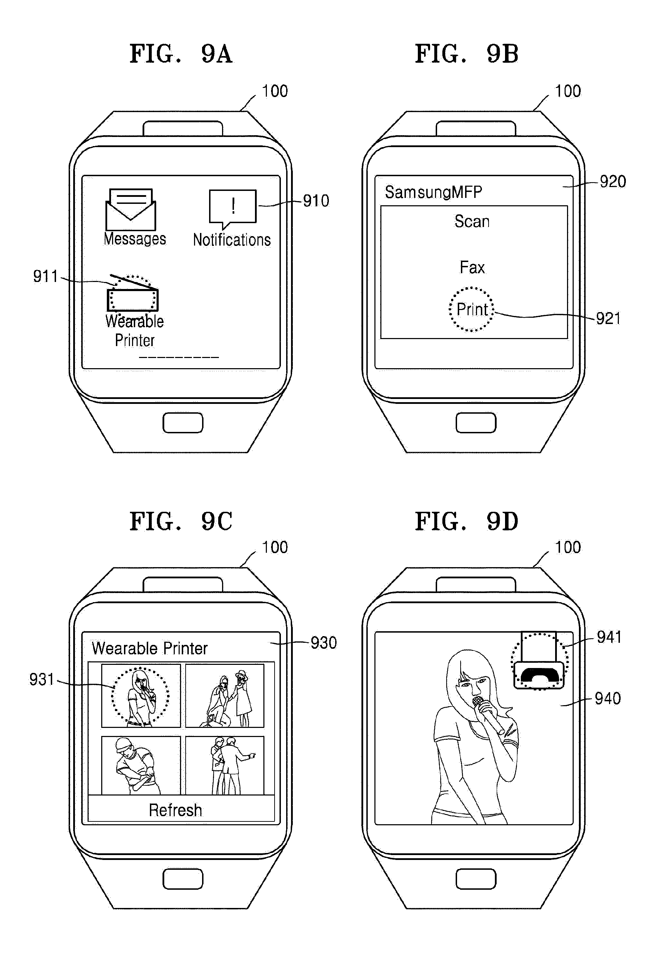

FIGS. 9A through 9D illustrate execution screens 910, 920, 930, and 940 of the second application 330 that may be output to the wearable device 100, according to exemplary embodiments.

The execution screens 910, 920, 930, and 940 of the second application 330 that are shown in FIGS. 9A through 9D may be output to the wearable device 100 while the operations of FIG. 8 are performed.

Referring to FIG. 9A, the execution screen 910 (also referred to as "main execution screen 910") of the second application 330 is output to the wearable device 100. When a user selects an icon 911 displayed on the main execution screen 910, the second application 330 may transmit notification of execution of the first application 310 to the third application 320.

Referring to FIG. 9B, a list 920 including tasks that are performable by the image forming apparatus 120 is displayed on the wearable device 100. When a user selects a printing task 921 from the list 920, the second application 330 may generate printing task information.

Referring to FIG. 9C, a list 930 of a plurality of pieces of content is displayed on the wearable device 100. In the list 930, titles of the plurality of pieces of content may be listed or images of the plurality of pieces of content may be listed. When the user selects content 931 displayed on the list 930, the second application 330 may include information about a storage path of the content 931 in the printing task information. Although not illustrated in FIG. 9C, the wearable device 100 may display set values that are requested for a printing task, and the set values may be determined according to user's selection.

Referring to FIG. 9D, the wearable device 100 may display an image 940 that corresponds to the content 931 to be printed. When the user selects an icon 941 displayed on the wearable device 100, the consumer module of the second application 330 may transmit the printing task information to the provider module of the third application 320.

Although not illustrated in FIGS. 9A through 9D, the wearable device 100 may output an error message indicating an error if the printing task information has the error, or may output a message indicating whether the printing task has been successfully performed or has failed.

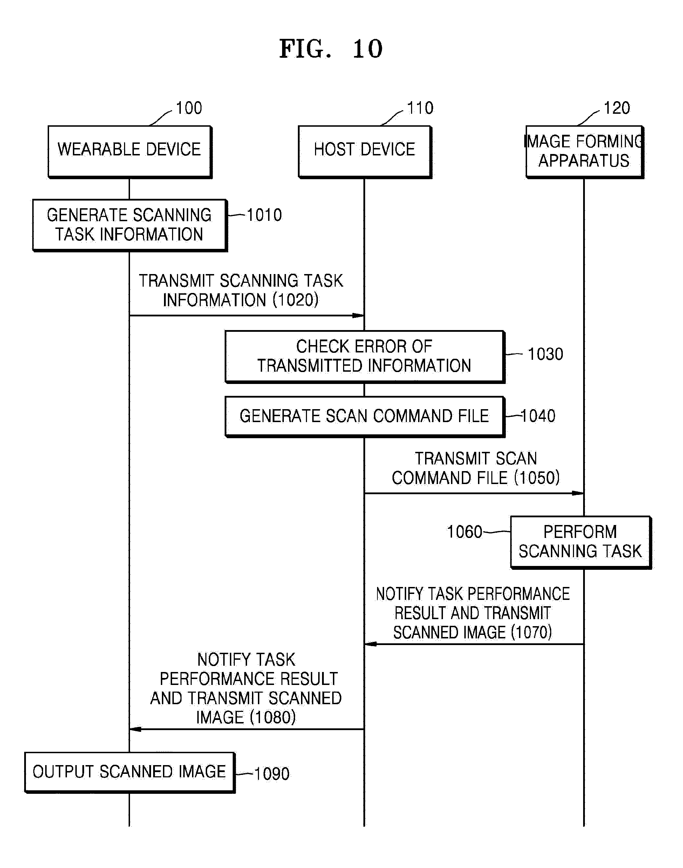

FIG. 10 is a flowchart of an example in which the wearable device 100, the host device 110, and the image forming apparatus 120 operate when the image forming apparatus 120 performs a task of scanning content, according to an exemplary embodiment.

The flowchart of FIG. 10 is performed by operations that are processed in chronological order in the wearable device 100, the host device 110, and the image forming apparatus 120 shown in FIGS. 1 through 3. Thus, although descriptions are omitted, if the descriptions are described above with reference to the wearable device 100, the host device 110, and the image forming apparatus 120 shown in FIGS. 1 through 5, the descriptions may also be applied to the flowchart of FIG. 10.

Also, although not illustrated in FIG. 10, as described above with reference to FIG. 6, an exchange of information between the wearable device 100 and the host device 110 is performed via the third application 320 installed in the host device 110.

In operation 1010, the wearable device 100 generates scanning task information. For example, the second application 330 may generate the scanning task information, based on a user input. The scanning task information may include information about set values that are requested for a scanning task. For example, the set values that are requested for the scanning task may include a color of a scan target image, a scan quality, a size of a scan paper, whether scan target content exists on an ADF or a flatbed, a type of a scan file, etc. However, the set values are not limited to the aforementioned examples, and any option that may be requested for a general scanning task may be limitlessly used.

In operation 1020, the wearable device 100 transmits the scanning task information to the host device 110. For example, the consumer module of the second application 330 may transmit the scanning task information to the provider module of the third application 320.

In operation 1030, the host device 110 checks whether information transmitted from the wearable device 100 has an error. For example, the first application 310 may check whether the set values included in the scanning task information have an error. Also, the first application 310 may check whether the image forming apparatus 120 is capable of performing the scanning task. Although not illustrated in FIG. 10, if the scanning task information has an error or the image forming apparatus 120 is not capable of performing the scanning task, the first application 310 may generate an error message, and the provider module of the third application 320 may transmit the error message to the consumer module of the second application 330.

In operation 1040, the host device 110 generates a scan command file. For example, the first application 310 may generate a PRN file for instructing the image forming apparatus 120 to perform the scanning task.

In operations 1050 and 1060, the host device 110 transmits the scan command file to the image forming apparatus 120, and the image forming apparatus 120 performs the scanning task.

In operation 1070, the image forming apparatus 120 notifies the host device 110 of a task performance result related to the scanning task. The task performance result may include information indicating whether the scanning task has been successfully performed or has failed.

In operation 1080, the host device 110 notifies the wearable device 100 of the task performance result related to the scanning task, and transmits a scanned image to the wearable device 100. The scanned image that is transmitted to the wearable device 100 may be a thumbnail of the scanned image. For example, the provider module of the third application 320 may transmit information about the task performance result and the thumbnail of the scanned image to the consumer module of the second application 330.

In operation 1090, the wearable device 100 may output a scanned image.

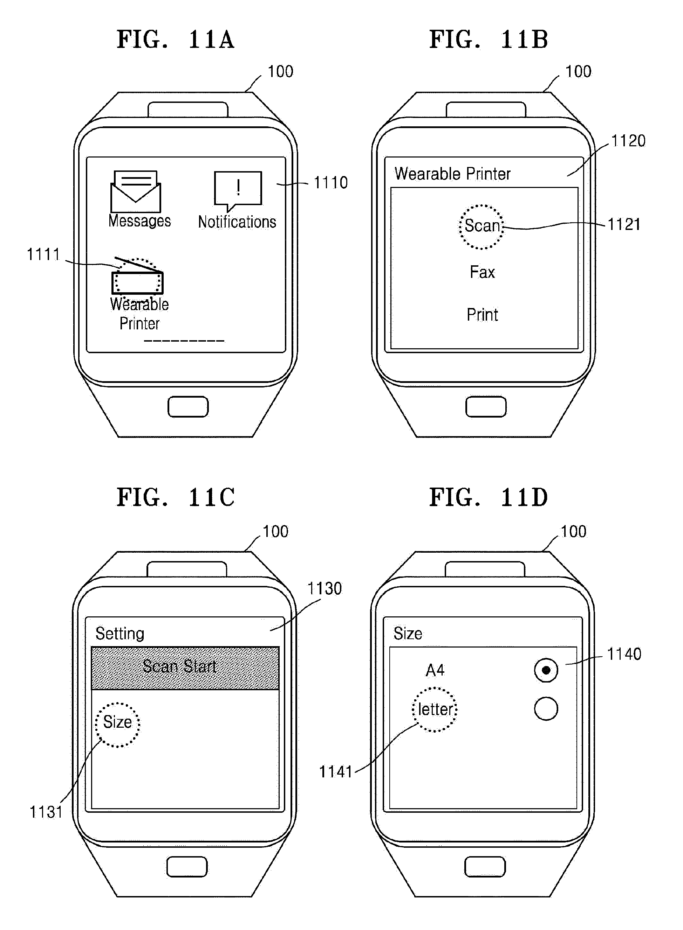

FIGS. 11A through 11H illustrate execution screens 1110, 1120, 1130, 1140, 1150, 1160, 1170, and 1180 of the second application 330 that may be output to the wearable device 100, according to exemplary embodiments.

The execution screens 1110, 1120, 1130, 1140, 1150, 1160, 1170, and 1180 of the second application 330 that are shown in FIGS. 11A through 11H may be output to the wearable device 100 while the operations of FIG. 10 are performed.

Referring to FIG. 11A, the execution screen 1110 (also referred to as "main execution screen 1110") of the second application 330 is output to the wearable device 100. When a user selects an icon 1111 displayed on the main execution screen 1110, the second application 330 may transmit notification of execution of the first application 310 to the third application 320.

Referring to FIG. 11B, a list 1120 including tasks that are performable by the image forming apparatus 120 is displayed on the wearable device 100. When the user selects a scanning task 1121 from the list 1120, the second application 330 may generate scanning task information.

Referring to FIGS. 11C and 11D, the wearable device 100 displays the execution screens 1130 and 1140 for receiving a user input of designating set values requested for the scanning task 1121. When the user designates set values 1131 and 1141 on the execution screens 1130 and 1140 that are output to the wearable device 100, the second application 330 may include the set values 1131 and 1141, which are designed by the user, in the scanning task information.

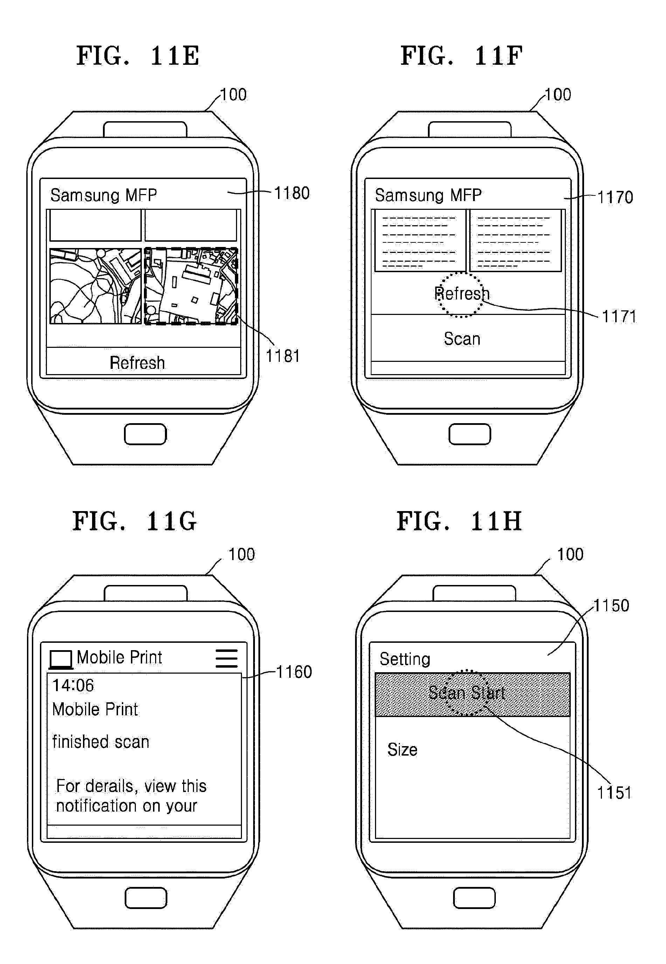

Referring to FIG. 11E, the wearable device 100 displays the execution screen 1150 on which the set values 1131 and 1141 are listed. When the user selects an icon 1151 from the execution screen 1150 that is output to the wearable device 100, the second application 330 may transmit the scanning task information to the third application 320.

Referring to FIG. 11F, the wearable device 100 displays the execution screen 1160 indicating a task performance result related to the scanning task 1121 that was performed by the image forming apparatus 120. While FIG. 11F illustrates the execution screen 1160 of a case in which the image forming apparatus 120 has successfully performed the scanning task 1121, even if the image forming apparatus 120 has failed the scanning task 1121, a screen corresponding to the failure may be displayed and the screen can be refreshed by selecting refresh task 1161.

Referring to FIG. 11G, the wearable device 100 displays thumbnails 1170 of images that are stored in the host device 110 or the wearable device 100. The thumbnails 1170 displayed on the wearable device 100 may not include a thumbnail that indicates scanned content. Thus, when the user selects an icon 1171 for updating the thumbnails 1170 displayed on the wearable device 100, the wearable device 100 may display the thumbnail of the scanned content.

Referring to FIG. 11H, the wearable device 100 may display, on a screen of the wearable device 100, thumbnails 1180 that include a thumbnail 1181 of scanned content. Thus, the user may check a scanned image by using the wearable device 100.

Although not illustrated in FIGS. 11A through 11H, if the scanning task information has an error, the wearable device 100 may output an error message indicating the error.

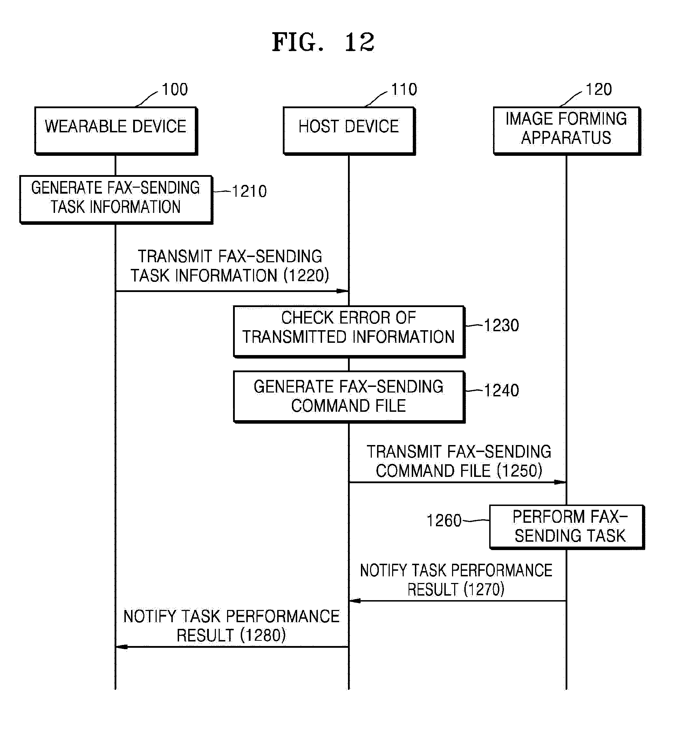

FIG. 12 is a flowchart of an example in which the wearable device 100, the host device 110, and the image forming apparatus 120 operate when the image forming apparatus 120 performs a task of sending a fax, according to an exemplary embodiment.

The flowchart of FIG. 12 is performed by operations that are processed in chronological order in the wearable device 100, the host device 110, and the image forming apparatus 120 shown in FIGS. 1 through 3. Thus, although descriptions are omitted, if the descriptions are described above with reference to the wearable device 100, the host device 110, and the image forming apparatus 120 shown in FIGS. 1 through 5, the descriptions may also be applied to the flowchart of FIG. 12.

Also, although not illustrated in FIG. 12, as described above with reference to FIG. 6, an exchange of information between the wearable device 100 and the host device 110 is performed via the third application 320 installed in the host device 110.

In operation 1210, the wearable device 100 generates fax-sending task information. For example, the second application 330 may generate the fax-sending task information, based on a user input. The fax-sending task information may include information about a fax number of a receiver to whom the fax is to be transmitted, and set values that are requested for a fax-sending task. If content to be sent by the fax is stored in the host device 110, the fax-sending task information may include information about a storage path of the content.

For example, the set values requested for the fax-sending task may include a size of the content, a size of a printing paper, a quality, etc. However, the set values are not limited to the aforementioned examples, and any option that may be requested for a general fax-sending task may be limitlessly used.

In operation 1220, the wearable device 100 transmits the fax-sending task information to the host device 110. For example, the consumer module of the second application 330 may transmit the fax-sending task information to the provider module of the third application 320.

In operation 1230, the host device 110 checks whether the information transmitted from the wearable device 100 has an error. For example, the first application 310 may check whether the fax number of the receiver or the set values included in the fax-sending task information have an error. Also, the first application 310 may check whether the image forming apparatus 120 is capable of performing the fax-sending task. Although not illustrated in FIG. 12, if the fax-sending task information has an error or the image forming apparatus 120 is incapable of performing the fax-sending task, the first application 310 may generate an error message, and the provider module of the third application 320 may transmit the error message to the consumer module of the second application 330.

In operation 1240, the host device 110 generates a fax-sending command file. For example, the first application 310 may generate a PRN file for instructing the image forming apparatus 120 to perform the fax-sending task.

In operations 1250 and 1260, the host device 110 transmits the fax-sending command file to the image forming apparatus 120, and the image forming apparatus 120 performs the fax-sending task.

In operation 1270, the image forming apparatus 120 notifies the host device 110 of a task performance result related to the fax-sending task. The task performance result may include information indicating whether the fax-sending task has been successfully performed or has failed.

In operation 1280, the host device 110 notifies the wearable device 100 of the task performance result related to the fax-sending task. For example, the provider module of the third application 320 may transmit information about the task performance result related to the fax-sending task to the consumer module of the second application 330.

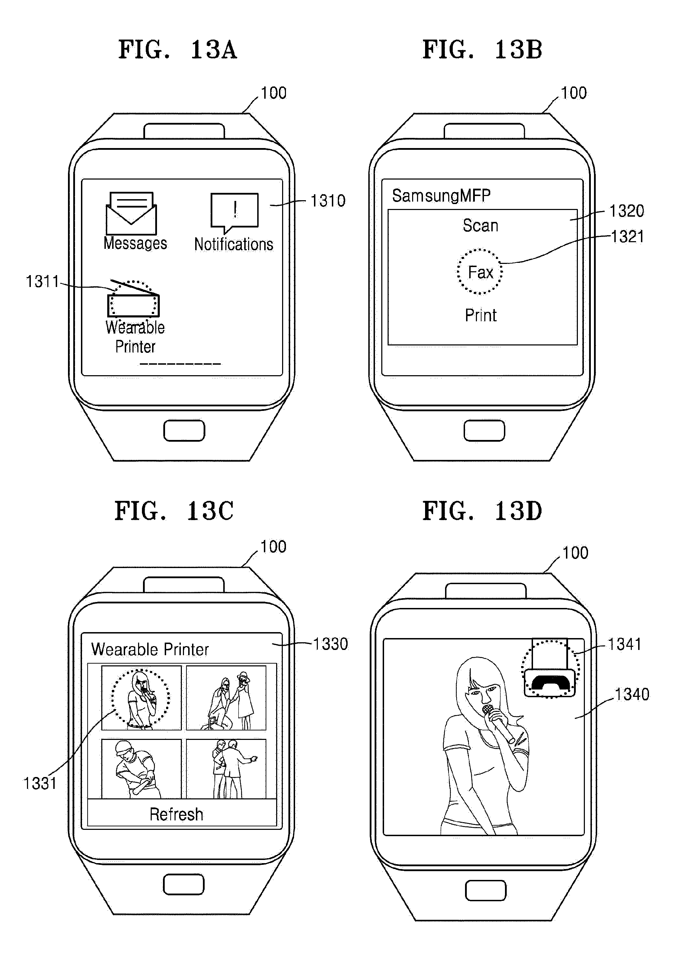

FIGS. 13A through 13F illustrate execution screens 1310, 1320, 1330, 1340, 1350, and 1360 of the second application 330 that may be output to the wearable device 100, according to exemplary embodiments.

The execution screens 1310, 1320, 1330, 1340, 1350, and 1360 of the second application 330 that are shown in FIGS. 13A through 13F may be output to the wearable device 100 while the operations of FIG. 12 are performed.

Referring to FIG. 13A, the execution screen 1310 (also referred to as "main execution screen 1310") of the second application 330 is output to the wearable device 100. When a user selects an icon 1311 displayed on the main execution screen 1110, the second application 330 may transmit notification of execution of the first application 310 to the third application 320.

Referring to FIG. 13B, a list 1320 including tasks that are performable by the image forming apparatus 120 is displayed on the wearable device 100. When a user selects a fax-sending task 1321 from the list 1320, the second application 330 may generate fax-sending task information.

Referring to FIGS. 13C and 13D, a list 1330 of a plurality of pieces of content is displayed on the wearable device 100. In the list 1330, titles of the plurality of pieces of content may be listed or images of the plurality of pieces of content may be listed. When the user selects content 1331 displayed on the list 1330, the wearable device 100 may display an image 1340 that corresponds to the content 1331 to be sent by a fax. When the user selects an icon 1341 displayed on the wearable device 100, the second application 330 may include information about a storage path of the content 1331 in the fax-sending task information.

Although not illustrated in FIGS. 13C and 13D, the wearable device 100 may display set values that are requested for a fax-sending task, and the set values may be determined according to user's selection.

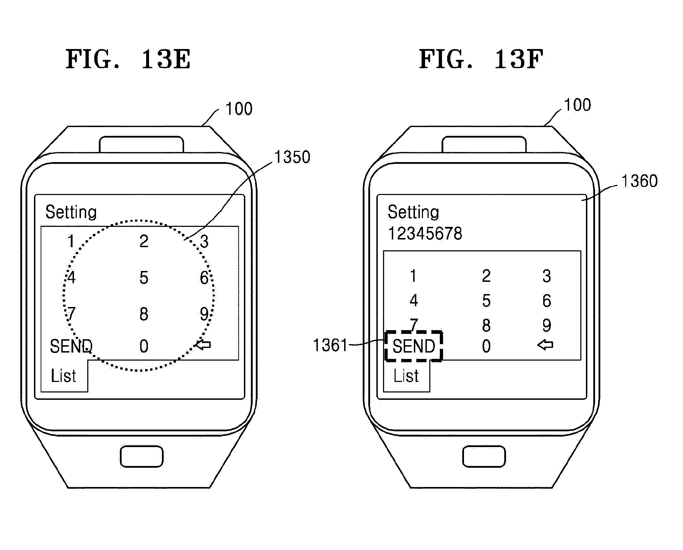

Referring to FIGS. 13E and 13F, the wearable device 100 displays the execution screen 1350 for receiving an input of a fax number of a receiver. When the user inputs the fax number of the receiver to the wearable device 100 and selects a 'SEND' icon 1361, the consumer module of the second application 330 may transmit the fax-sending task information including the fax number to the provider module of the third application 320.

Although not illustrated in FIGS. 13A through 13F, the wearable device 100 may output an error message indicating an error if the fax-sending task information has the error, or may output a message indicating whether the fax-sending task has been successfully performed or has failed. Also, the wearable device 100 may output a screen indicating whether the image forming apparatus 120 has successfully performed or has failed the fax-sending task.

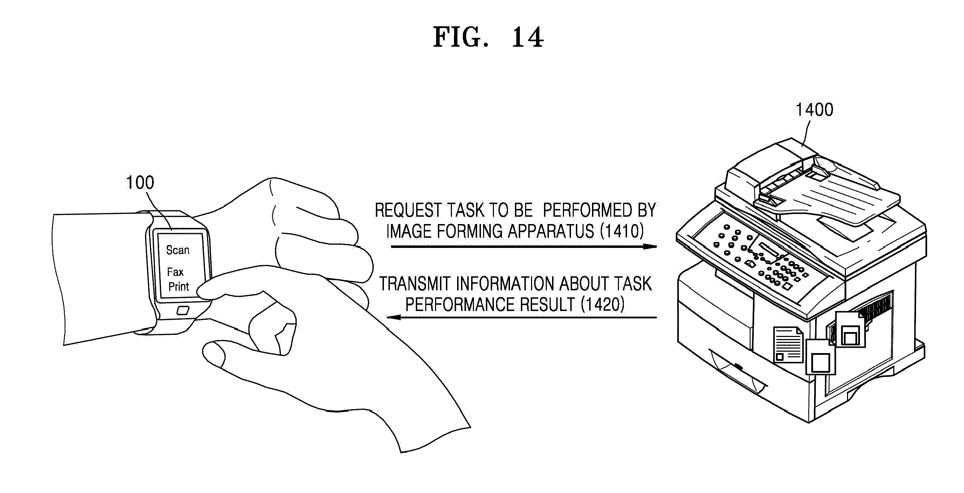

FIG. 14 is a diagram illustrating a system for controlling an operation of the image forming apparatus 1400, according to another exemplary embodiment.

Referring to FIG. 14, the system includes the wearable device 100 and the image forming apparatus 1400. Here, an operation of the wearable device 100 is the same as that described with reference to FIGS. 1 through 13. Thus, the operation of the wearable device 100 is not particularly described.

Comparing to the system 1 of FIG. 1, the system of FIG. 14 does not include the host device 110. The image forming apparatus 1400 of FIG. 14 may perform an operation of the host device 110 shown in FIG. 1. In other words, the first application 310 and the third application 320 that were installed in the host device 110 may be installed in the image forming apparatus 1400, and an operating system of the image forming apparatus 1400 may be the same as an operating system of the host device 110.

Thus, the wearable device 100 may request the image forming apparatus 1400 to perform a task (operation 1410), and the image forming apparatus 1400 may transmit information about a task performance result related to the task to the wearable device 100 (operation 1420).

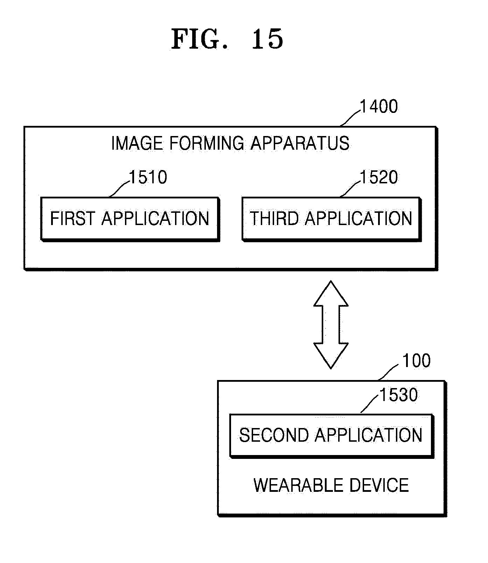

FIG. 15 illustrates applications installed in the wearable device 100 and the host device 110, according to another exemplary embodiment.

Referring to FIG. 15, a first application 1510 and a third application 1520 may be installed in the image forming apparatus 120, and a second application 1530 may be installed in the wearable device 100. The first application 1510, the second application 1530, and the third application 1520 shown in FIG. 15 are equal to the first application 310, the second application 330, and the third application 320 shown in FIG. 3. Thus, detailed descriptions about the first application 1510, the second application 1530, and the third application 1520 are omitted.

As the first application 1510 and the third application 1530 are installed in the image forming apparatus 1400, the image forming apparatus 1400 may perform a function of the host device 110 shown in FIG. 1. Thus, without the host device 110, the wearable device 100 may transmit task request information to the image forming apparatus 1400 and may receive a task performance result from the image forming apparatus 1400.

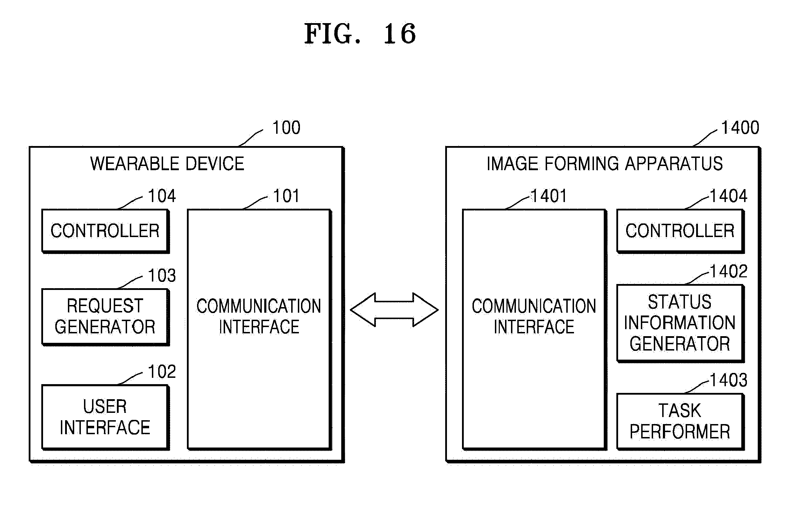

FIG. 16 is a configuration diagram illustrating the wearable device 100 and the image forming apparatus 120, according to another exemplary embodiment.

FIG. 16 only illustrates elements of the wearable device 100 and the image forming apparatus 120 that are related to an exemplary embodiment. Thus, one of ordinary skill in the art would understand that the wearable device 100 and the image forming apparatus 120 may further include general-use elements as well as the elements shown in FIG. 2.

Also, each of the controller 104 of the wearable device 100 and a controller 1404, a status information generator 1402, and a task performer 1403 of the image forming apparatus 1400 may correspond to a processor or a plurality of processors. The processor may be implemented as an array of a plurality of logic gates or may be implemented as a combination of a general-use microprocessor and a memory that stores a program that is executable in the general-use microprocessor. Also, one of ordinary skill in the art would understand that the processor may be embodied using other hardware configurations.

The wearable device 100, and a communication interface 1401 and the controller 1404 that are included in the image forming apparatus 1400 shown in FIG. 16 are equal to the wearable device 100, and the communication interface 121 and the controller 124 that are included in the image forming apparatus 120 shown in FIG. 2. Thus, descriptions about the aforementioned elements are omitted here.

The status information generator 1402 generates status information indicating a status of the image forming apparatus 1400. Here, examples of the status information indicating the status of the image forming apparatus 1400 are described above with reference to FIG. 2.

The status information generated by the status information generator 1402 may be transmitted to the wearable device 100 via the communication interface 1401. The status information may be transmitted when the wearable device 100 requests it, but if a predetermined condition is satisfied, the status information may be transmitted (i.e., in a push manner) without a request from the wearable device 100.

The task performer 1403 performs a task, according to a request transmitted from the wearable device 100. The task includes a task of printing content, a task of scanning content, or a fax sending task, and the content includes a document or an image. For example, the task performer 1403 may operate hardware configuration required to perform the task or may execute software required to perform the task.

The task performer 1403 generates information indicating a task performance result related to the task. The information indicating the task performance result may include information about whether the image forming apparatus 1400 has successfully performed the task or has failed to perform the task and may include data (e.g., an image that is generated according to a scanning task) that is generated according to the performance of the task. The information generated by the task performer 1403 may be transmitted to the wearable device 100 via the communication interface 1401.

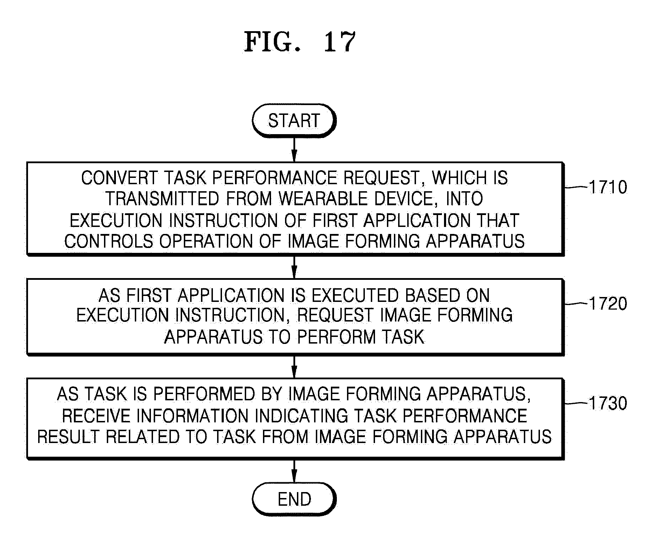

FIG. 17 is a flowchart of a method of controlling an operation of the image forming apparatus 120 or image forming apparatus 1400 by using the wearable device 100, according to an exemplary embodiment.

Referring to FIG. 17, the method of controlling the operation of the image forming apparatus 120 or image forming apparatus 1400 is performed by operations that are processed in chronological order in the wearable device 100, the host device 110, and the image forming apparatus 120 shown in FIGS. 1 through 3 and the image forming apparatus shown in FIGS. 14 through 16. Thus, although descriptions are omitted, if the descriptions are described above with reference to the wearable device 100, the host device 110, and the image forming apparatus 120 shown in FIGS. 1 through 3, and the image forming apparatus shown in FIGS. 14 through 16, the descriptions may also be applied to the method of FIG. 17.

In operation 1710, the third application 320 converts a task performance request related to a task, which is transmitted from the wearable device 100, into an execution instruction of the first application 310 that controls the operation of the image forming apparatus 120. The task performance request may be generated by the second application 330 installed in the wearable device 100. Also, the first application 310 and the third application 320 may be applications that are installed in the host device 110 or the image forming apparatus 1400.

In operation 1720, as the first application 310 is executed based on the execution instruction that is converted in operation 1710, the first application 310 requests the image forming apparatus 120 to perform the task.

In operation 1730, as the task is performed by the image forming apparatus 120, the first application 310 receives information indicating a task performance result related to the task from the image forming apparatus 120.

As described above, according to the one or more of the above exemplary embodiments, the wearable device may control an operation of the image forming apparatus. Thus, even if a user of the wearable device is located in a place distant from the image forming apparatus, the user may control the operation of the image forming apparatus, so that user convenience may improve.

Processes, functions, methods, and/or software in apparatuses described herein may be recorded, stored, or fixed in one or more non-transitory computer-readable media (computer readable storage (recording) media) that includes program instructions (computer readable instructions) to be implemented by a computer to cause one or more processors to execute (perform or implement) the program instructions. The media may also include, alone or in combination with the program instructions, data files, data structures, and the like. The media and program instructions may be those specially designed and constructed, or they may be of the kind well-known and available to those having skill in the computer software arts. Examples of non-transitory computer-readable media include magnetic media, such as hard disks, floppy disks, Universal Serial Bus (USBs) Memory Devices, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions may be executed by one or more processors. The described hardware devices may be configured to act as one or more software modules that are recorded, stored, or fixed in one or more non-transitory computer-readable media, in order to perform the operations and methods described above, or vice versa. In addition, a non-transitory computer-readable medium may be distributed among computer systems connected through a network and program instructions may be stored and executed in a decentralized manner. In addition, the computer-readable media may also be embodied in at least one application specific integrated circuit (ASIC) or Field Programmable Gate Array (FPGA).

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the scope of the present disclosure as defined by the following claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of controlling an operation of an image forming apparatus by using a wearable device, the method comprising:
converting a task performance request related to a task, which is transmitted from the wearable device, into an execution instruction of a first application that controls the operation of the image forming apparatus;
requesting, as the first application is executed based on the execution instruction, the image forming apparatus to perform the task; and
receiving, as the task is performed by the image forming apparatus, information indicating a task performance result related to the task from the image forming apparatus.

2. The method of claim 1, wherein the task performance request is generated so as to correspond to a user input received via an execution screen of a second application installed in the wearable device.

3. The method of claim 1, wherein, in the converting, the task performance request that is generated by a second application installed in the wearable device is transmitted to a host device in which the first application is installed, and a third application installed in the host device converts the task performance request into the execution instruction.

4. The method of claim 3, wherein the second application and the third application interoperate with each other.

5. The method of claim 3, wherein the execution instruction is an instruction of the task performance request that is converted into an intent that corresponds to an operating system of the host device.

6. The method of claim 1, wherein:
the task comprises a task of searching for one or more external devices connected to a host device in which the first application is installed; and
the receiving comprises receiving a list that comprises one or more found external devices from the image forming apparatus, and transmitting the list to the wearable device.

7. The method of claim 1, wherein:
the task comprises a task of printing content stored in a host device,
the first application is installed in the host device; and
the receiving, by the host device, comprises receiving a notification about whether the task of printing the content has been performed or has failed from the image forming apparatus, and transmitting the notification to the wearable device.

8. The method of claim 1, wherein:
the task comprises a task of scanning content,
the first application is installed in a host device; and
the receiving comprises receiving by the host device an image corresponding to the content that has been scanned from the image forming apparatus, and transmitting information about a storage path of the image to the wearable device.

9. The method of claim 1, wherein:
the task comprises a task of sending a fax,
the first application is installed in a host device, and
the receiving comprises receiving by the host device a notification about whether the task of sending the fax has been performed or has failed from the image forming apparatus, and transmitting the notification to the wearable device.

10. At least one non-transitory computer readable medium storing computer readable instructions which when executed control at least one processor to implement a method of any one of claims 1 to 9.

11. A system (1) for controlling an operation of an image forming apparatus (120), the system comprising:
a wearable device (100) in which a second application is installed; and
a host device (110) that is connected to the wearable device and the image forming apparatus, and in which a first application and a third application are installed,
wherein the third application converts a task performance request related to a task, which is transmitted from the wearable device, into an execution instruction of the first application, and
wherein the first application requests the image forming apparatus to perform the task, and receives information indicating a task performance result related to the task from the image forming apparatus.

12. The system of claim 11, wherein the task performance request is generated so as to correspond to a user input received via an execution screen of the second application.

13. The system of claim 11, wherein the second application transmits the task performance request to the third application, and the third application converts the task performance request into the execution instruction.

14. The system of claim 11, wherein:
the task comprises a task of searching for one or more external devices connected to the host device (110),
the first application receives, from the image forming apparatus, a list that comprises one or more external devices that are found according to the execution instruction of the third application, and the first application transmits the list to the third application, and
the third application transmits the list to the second application.

15. The system of claim 11, wherein:
the task comprises a task of printing content stored in the host device (110),
the first application receives, from the image forming apparatus, a notification about whether the task of printing the content that was performed according to the execution instruction of the third application has been completed or has failed, and the first application transmits the notification to the third application, and
the third application transmits the notification to the second application.

16. The system of claim 11, wherein:
the task comprises a task of scanning content,
the first application receives, from the image forming apparatus, an image corresponding to the content that has been scanned according to the execution instruction of the third application, and the first application transmits information about a storage path of the image to the third application; and
the third application transmits the information to the second application.

17. The system of claim 11, wherein:
the task comprises a task of sending a fax,
the first application receives, from the image forming apparatus (120), a notification about whether the task of sending the fax that was performed according to the execution instruction of the third application has been completed or has failed, and the first application transmits the notification to the third application, and
the third application transmits the notification to the second application.

18. An image forming apparatus (120) that operates in response to a request from a wearable device (100), the image forming apparatus comprises:
a first application installed in the image forming apparatus to control an operation of the image forming apparatus; and
a third application installed in the image forming apparatus and configured to convert a task performance request, which is transmitted from the wearable device, into an execution instruction of the first application,
wherein the third application is configured to receive the task performance request from a second application installed in the wearable device, and
wherein the first application controls the operation of the image forming apparatus, in response to the task performance request.

19. The image forming apparatus of claim 18, wherein the task performance request is generated so as to correspond to a user input received via an execution screen of the second application.

20. A wearable device (100) comprising:
a controller (104);
a wearable device application installed in the controller to generate an execution screen configured to receive a user input for a task and to generate a task performance request based on the user input for the task; and
a communication interface (101) configured to transmit the task performance request from the wearable device to a host device (110), in which a converter application is installed to convert the task performance request into an execution instruction, and in which an image forming controlling application is installed to execute the execution instruction to control an image forming apparatus (120) to perform the task corresponding to the task performance request.
